# EUROPEAN PATENT APPLICATION

(11) **EP 3 968 500 A1**
(43) Date of publication of application: **16.03.2022**
(21) Application number: 19927580.1
(22) Date of filing: 07.05.2019
(51) Int. Cl.: H02K 7/14

(54) **DYNAMO-ELECTRIC MACHINE**

(71) Applicant: Nissan Motor Co., Ltd., Yokohama-shi, Kanagawa 221-0023 (JP); Renault s.a.s, 92100 Boulogne Billancourt (FR)
(72) Inventor: KUWAHARA, Takashi, Atsugi-shi, Kanagawa 243-0123 (JP); ARAI, Kenji, Atsugi-shi, Kanagawa 243-0123 (JP); DELEGUE, Jacques, 92100 Boulogne-Billancourt (FR); FOUQUIAU, Alain, 92100 Boulogne-Billancourt (FR)
(74) Representative: Osha Liang
(86) International application number: PCT/IB2019/000502
(87) International publication number: WO 2020/225582

(57) **Abstract**

A rotating electric machine includes a rotor and a stator in a housing, and a rotor shaft of the rotor is connected to a power transmission shaft of a power transmission device. In this rotating electric machine, a bearing is provided on the housing, a base end of the rotor shaft is supported via the bearing, and the rotor shaft and the power transmission shaft are coupled to each other by inserting one of the two shafts into a shaft hole formed at a tip of the other shaft. The rotor shaft includes a first spigot portion that is spigot connected to the power transmission shaft at a position corresponding to a tip part of the one shaft on which the shaft hole is formed, a second spigot portion that is formed at a position different from the first spigot portion in an axial direction and is spigot connected to the power transmission shaft, and a spline portion that is formed between the first spigot portion and the second spigot portion and is spline-coupled to the power transmission shaft.

## Description

### TECHNICAL FIELD

The present invention relates to a rotating electric machine.

### BACKGROUND ART

JP2009-166591 A discloses a configuration in which, in a motor for electric vehicles used by being attached to a transmission, a power transmission shaft of the transmission and a rotor shaft of the motor are coupled to each other.

### SUMMARY OF INVENTION

In general, a rotor shaft of a motor as a rotating electric machine and a power transmission shaft of a transmission as a power transmission device are separately supported by bearings. Since a bearing has a structural backlash, the shafts may be supported in an inclined state when the shafts supported by the bearings are coupled to each other. In this way, in the above configuration, centering accuracy of the rotor shaft may decrease.

It is an object of the present invention to provide a rotating electric machine capable of improving centering accuracy of a rotor shaft.

According to an aspect of the present invention, a rotating electric machine including a rotor and a stator in a housing is provided in which a rotor shaft of the rotor is connected to a power transmission shaft of a power transmission device. In this rotating electric machine, a bearing is provided on the housing, a base end of the rotor shaft is supported via the bearing, and the rotor shaft and the power transmission shaft are coupled to each other by inserting one of the two shafts into a shaft hole formed at a tip of the other shaft. The rotor shaft includes a first spigot portion that is spigot connected to the power transmission shaft at a position corresponding to a tip part of the one shaft in which the shaft hole is formed, a second spigot portion that is formed at a position different from the first spigot portion in an axial direction and is spigot connected to the power transmission shaft, and a spline portion that is formed between the first spigot portion and the second spigot portion and is spline-coupled to the power transmission shaft.

### BRIEF DESCRIPTION OF DRAWINGS

FIG. 1 is a partial longitudinal cross-sectional view of a motor system provided with a transmission and a motor in a first embodiment of the present invention.
FIG. 2 is a partial enlarged view of a first spigot portion in FIG. 1.
FIG. 3 is a partial longitudinal cross-sectional view of a motor system provided with a transmission and a motor in a second embodiment of the present invention.
FIG. 4 is a partial enlarged view of a first spigot portion in FIG. 3.

### DESCRIPTION OF EMBODIMENTS

Hereinafter, embodiments of the present invention are described with reference to the drawings.

### <First Embodiment>

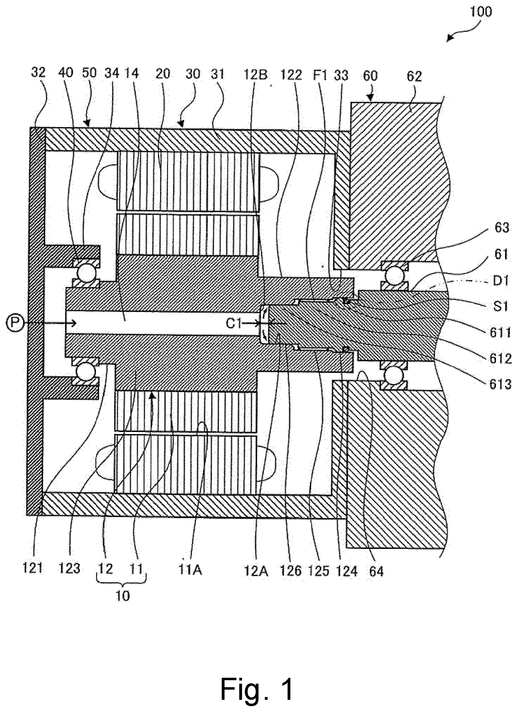

FIG. 1 is a partial longitudinal cross-sectional view of a motor system 100 provided with a transmission 60 and a motor 50 according to a first embodiment of the present invention.

As illustrated in FIG. 1, the motor system 100 (rotating electric machine system) is provided with the motor 50 and the transmission 60, and configures a drive device for electric vehicles, for example. The motor system 100 of this embodiment is described as an automobile system but may be used as a drive device of equipment other than vehicles e.g., various kinds of electric equipment or industrial machines.

The motor 50 rotates by receiving the supply of power from a power supply, such as a battery, mounted in a vehicle and functions as an electric motor for driving wheels of the vehicle. The motor 50 also functions as a generator driven by external force to generate electricity. Therefore, the motor 50 is configured as a so-called motor generator (rotating electric machine) functioning as a motor and a generator. In this embodiment, the motor 50 is configured as a motor generator for electric vehicles but may be configured as a motor generator to be used for various kinds of electric equipment or industrial machines.

The motor 50 is provided with a rotor 10, a stator 20 disposed to surround the rotor 10, and a housing 30 housing the rotor 10 and the stator 20.

The rotor 10 is provided with a cylindrical rotor core 11 and a rotor shaft 12 fixed in an insertion hole 11A of the rotor core 11. The rotor 10 is disposed inside the stator 20 and is configured to rotate with respect to the stator 20. The rotor shaft 12 is configured as a shaft member projecting from both end surfaces of the rotor core 11 to the outside in the axial direction. One end portion 121 (left end) of the rotor shaft 12 is rotatably supported by a bearing 40 provided on the housing 30 and the other end portion 122 (right end) of the rotor shaft 12 is coupled to a rotation shaft 61 of the transmission 60. It is preferable that the rotor shaft 12 and the rotation shaft 61 are disposed so that the rotation centers thereof are located on the same line.

The stator 20 is a cylindrical member formed by laminating a plurality of electromagnetic steel sheets, and around the teeth of the stator 20, U-phase, V-phase, and W-phase coils are wound. The stator 20 is fixed to the housing 30 in a state where the outer peripheral surface thereof contacts the inner peripheral surface of the housing 30.

The housing 30 is a case member housing the rotor 10 and the stator 20 and includes a housing body portion 31 and a lid portion 32. The motor 50 and the transmission 60 are disposed adjacent to each other. The right side surface of the housing body portion 31 is fixed to the left side surface of a transmission case 62 of the transmission 60 by a fastening means, such as a bolt. In the right side surface of the housing body portion 31, a through-hole 33 is formed which allows the other end portion 122 of the rotor shaft 12 to pass through to the outside of the housing 30.

The transmission 60 is provided with the rotation shaft 61 and a plurality of gears, which is not illustrated, in the transmission case 62. The transmission 60 is configured as a power transmission device changing the speed of the rotational power of the rotor shaft 12 and transmitting the power to a drive shaft. The rotation shaft 61 (power transmission shaft) is rotatably supported by a ball bearing 63 provided on the transmission case 62.

In the left side surface of the transmission case 62, a through-hole 64 is formed which allows a left end portion (tip) of the rotation shaft 61 to pass through to the outside of the transmission case 62. The through-hole 64 of the transmission case 62 is disposed to communicate with the through-hole 33 of the housing 30.

Next, a support structure of the rotor shaft 12 of the motor 50 and the rotation shaft 61 of the transmission 60 will be described.

As illustrated in FIG. 1, the rotor shaft 12 of the motor 50 is configured of a center portion 123 fixed in the insertion hole 11A of the rotor core 11, the one end portion 121 (base end) provided extending from the center portion 123 to the side opposite to the transmission 60, and the other end portion 122 (tip) provided extending from the center portion 123 to the transmission 60. The outer diameters of the one end portion 121 and the other end portion 122 are formed to be smaller than the outer diameter of the center portion 123, and the one end portion 121 and the other end portion 122 are shaft members thinner than the center portion 123.

Inside the lid portion 32 of the housing 30, a cylindrical bearing supporting portion 34 supporting the bearing 40 is formed in a projecting manner. The one end portion 121 (base end) of the rotor shaft 12 is rotatably supported by the bearing 40 fixed to the inner peripheral surface of the bearing supporting portion 34. The bearing 40 is a single-row ball bearing (deep groove ball bearing), for example. An inner race of the bearing 40 is attached to the outer peripheral surface of the one end portion 121, and an outer race of the bearing 40 is attached to the inner peripheral surface of the bearing supporting portion 34. Thus, when viewed in the motor 50 alone, the rotor shaft 12 of the rotor 10 is in a state where only the one end portion 121 is supported by the bearing 40.

Next, a coupling portion between the other end portion 122 of the rotor shaft 12 and the rotation shaft 61 of the transmission 60 will be described.

In the rotor shaft 12 of the present embodiment, the tip of the rotation shaft 61 is inserted into a shaft hole 12A formed in the other end portion 122 (tip). The rotation shaft 61 is a shaft member formed such that the outer diameter thereof reduces stepwise toward the tip. A third insertion portion 613, a second insertion portion 612, and a first insertion portion 611 are formed at the tip part of the rotation shaft 61 in this order from the tip side. The second insertion portion 612 is located on the right side (base end side) of the third insertion portion 613, and has an outer diameter larger than the outer diameter of the third insertion portion 613. The first insertion portion 611 is located on the right side (base end side) of the second insertion portion 612, and has an outer diameter larger than the outer diameter of the second insertion portion 612.

The rotor shaft 12 of the rotor 10 has the shaft hole 12A formed to be recessed in the axial direction from a tip surface. The shaft hole 12A includes a first spigot portion 124, a spline portion 125 having an inner diameter smaller than that of the first spigot portion 124, and a second spigot portion 126 having an inner diameter smaller than that of the spline portion 125 from the tip thereof toward a hole bottom 12B.

In a state where the rotation shaft 61 is inserted into the shaft hole 12A of the rotor shaft 12, the first spigot portion 124 of the rotor shaft 12 is spigot connected to the rotation shaft 61 at a position where the first spigot portion 124 faces the first insertion portion 611. That is, the first spigot portion 124 formed on the inner peripheral surface of the shaft hole 12A of the rotor shaft 12 is fitted to the outer peripheral surface of the rotation shaft 61 (first insertion portion 611) at a position including the tip part of the rotor shaft 12 (position closer to an opening end of the shaft hole 12A). The second spigot portion 126 of the rotor shaft 12 is spigot connected to the rotation shaft 61 at a position where the second spigot portion 126 faces the third insertion portion 613. That is, the second spigot portion 126 formed on the inner peripheral surface of the shaft hole 12A of the rotor shaft 12 is fitted to the outer peripheral surface of the rotation shaft 61 (third insertion portion 613) at a position closer to the tip of the rotation shaft 61 (position closer to the hole bottom of the shaft hole 12A).

The spline portion 125 of the rotor shaft 12 is formed between the first spigot portion 124 and the second spigot portion 126 in the axial direction. In other words, at the other end portion 122 of the rotor shaft 12, the first spigot portion 124 and the second spigot portion 126 are disposed at a distance in the axial direction via the spline portion 125. The spline portion 125 is configured to be spline-coupled to the outer peripheral surface of the rotation shaft 61 (second insertion portion 612). Since the rotor shaft 12 and the rotation shaft 61 are spline-coupled to each other, relative rotational movement between the two shafts is regulated.

According to the above configuration, the rotor shaft 12 is coupled to the rotation shaft 61 via the first and second spigot portions 124 and 126 disposed at a distance in the axial direction with the spline portion 125 interposed therebetween. As a result, since the coupling portion between the rotor shaft 12 and the rotation shaft 61 is long, it is possible to more reliably prevent the deviation of shaft centers between the shafts at the time of assembling.

In the motor system 100 as described above, various stresses act on the coupling portion between the rotor shaft 12 and the rotation shaft 61 in accompany with the rotation of the rotor shaft 12 during the operation of the motor 50 or the like. Such stresses may cause wear in the shaft coupling portion. Therefore, even when the centering accuracy of the shafts is increased, it is desirable to prevent the wear of the shaft coupling portion.

Therefore, the motor system 100 of the present embodiment is configured to supply lubricating oil to the shaft coupling portion.

An oil supply path 14 communicating with the shaft hole 12A is formed in the rotor shaft 12, and the lubricating oil is supplied to the coupling portion between the rotor shaft 12 and the rotation shaft 61 through the oil supply path 14. The lubricating oil is supplied to the oil supply path 14 from a pump P disposed outside the motor 50 or the like.

Although the rotor shaft 12 and the rotation shaft 61 are spigot connected and spline-coupled, even in such a shaft coupling portion, there are minute gaps between the first spigot portion 124 and the first insertion portion 611, between the spline portion 125 and the second insertion portion 612, and between the second spigot portion 126 and the third insertion portion 613. These gaps are necessary to insert the tip part of the rotation shaft 61 into the shaft hole 12A of the rotor shaft 12 and do not adversely affect spigot connection and spline connection. Further, in the shaft hole 12A of the rotor shaft 12, a clearance C1 is provided between the tip of the third insertion portion 613 of the rotation shaft 61 and the hole bottom 12B. In the present embodiment, the lubricating oil supplied from the oil supply path 14 is supplied to the shaft coupling portion through the above minute gaps and the clearance C1. Thus, in the present embodiment, a gap existing between the inner peripheral surface of the shaft hole 12A and the outer peripheral surface of the rotation shaft 61 from the clearance C1 to the first spigot portion 124 functions as an oil supply space F1 for supplying the lubricating oil to the shaft coupling portion.

To prevent the lubricating oil supplied from the oil supply path 14 through the space F1 from leaking from the tip of the rotor shaft 12, a seal member S1 is disposed between the inner peripheral surface of the shaft hole 12A in the first spigot portion 124 of the rotor shaft 12 and the outer peripheral surface of the shaft in the first insertion portion 611 of the rotation shaft 61. The seal member S1 is, for example, an O-ring attached to the outer peripheral surface of the first insertion portion 611 of the rotation shaft 61.

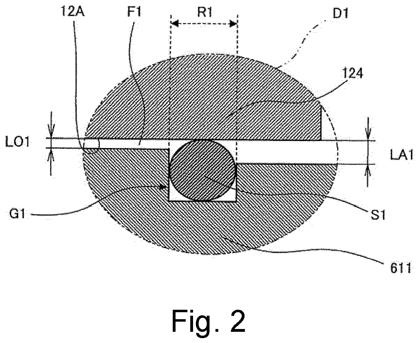

Next, a configuration of a region D1 of the first spigot portion 124 in the first embodiment will be described. FIG. 2 is an enlarged view of the region D1 of the first spigot portion 124.

An annular groove G1 for disposing a seal member is formed in the circumferential direction on the outer peripheral surface of the first insertion portion 611 of the rotation shaft 61 of the transmission 60. An axial dimension of the groove G1 is substantially equal to a diameter R1 of the seal member S1 in a cross section. The ring-shaped seal member S1 is fitted into the groove G1 of the first insertion portion 611 and fixed in the axial direction of the rotation shaft 61.

The left side of the first spigot portion 124 of the rotor shaft 12, that is, the first spigot portion 124 on the hole bottom 12B side of the shaft hole 12A with respect to the seal member S1, is a part where the outer peripheral surface of the rotation shaft 61 is spigot connected to the inner peripheral surface of the shaft hole 12A. The outer diameter of the rotation shaft 61 at this part is formed to be slightly smaller than the diameter of the shaft hole 12A. As a result, a gap LO1 is formed at the coupling portion between the rotor shaft 12 and the rotation shaft 61.

On the other hand, the right side of the first spigot portion 124, that is, the first spigot portion 124 on the tip side of the rotor shaft 12 with respect to the seal member S1, has a gap LA1 larger than the gap LO1. An upper limit of the size of the gap LA1 is a size at which the seal member S1 does not fall out of the groove G1, and a lower limit of the size of the gap LA1 is a size at which the rotor shaft 12 and the rotation shaft 61 do not come into contact with each other even when the rotor shaft 12 is inclined due to rotational operation or backlash of bearings.

The gaps LO1 and LA1 are designed by adjusting either or both of the inner diameter of the first spigot portion 124 and the outer diameter of the first insertion portion 611. As described above, in the first spigot portion 124 of the rotor shaft 12 of the present embodiment, the gap LA1 that is a so-called air tightening margin is larger than the gap LO1 that is a so-called oil tightening margin.

As described above, the lubricating oil for lubricating the coupling portion between the rotor shaft 12 and the rotation shaft 61 is supplied to the space F1 constituting the gap LO1 as the oil tightening margin. In the present embodiment, as illustrated in FIG. 1, the lubricating oil discharged from the pump P is supplied from the base end side to the tip side of the oil supply path 14, flows into the space F1 from the clearance C1, and is guided to the first spigot portion 124 through the second spigot portion 126. By supplying the lubricating oil in this way, it is possible to prevent wear at a coupling part between the rotor shaft 12 and the rotation shaft 61.

As illustrated in FIG. 1, in the present embodiment, the lubricating oil is supplied from the base end side toward the tip side of the rotor shaft 12. However, a supply direction of the lubricating oil is not limited thereto. For example, the oil supply path 14 may be formed along the shaft center of the rotation shaft 61. In this case, the lubricating oil is supplied from the base end to the tip of the rotation shaft 61, and then flows into the space F1 from the clearance C1.

When the inside of the motor 50 is cooled by oil or the like, the oil supplied to the shaft coupling portion may flow out to the outer periphery of the rotation shaft 61. In such a case, the seal member S1 may not be provided.

The motor 50 (rotating electric machine) of the motor system 100 according to the present embodiment described above can obtain the following effects.

The motor 50 of the motor system 100 of the present embodiment includes the rotor 10 and the stator 20 in the housing 30, and the rotor shaft 12 of the rotor 10 is connected to the rotation shaft 61 of the transmission 60. The housing 30 is provided with the bearing 40, one end portion 121 of the rotor shaft 12 is supported via the bearing 40, and the rotor shaft 12 and the rotation shaft 61 are coupled to each other by inserting the rotation shaft (one of the two shafts) 61 into the shaft hole 12A formed at the tip of the rotor shaft (the other shaft) 12. The rotor shaft 12 includes the first spigot portion 124 that is spigot connected to the rotation shaft 61 at a position including the tip part of the rotor shaft 12 in which the shaft hole 12A is formed, the second spigot portion 126 that is formed at a position different from the first spigot portion 124 in the axial direction and is spigot connected to the rotation shaft 61, and the spline portion 125 that is formed between the first spigot portion 124 and the second spigot portion 126 and is spline-coupled to the rotation shaft 61.

Thus, the rotor shaft 12 is coupled to the rotation shaft 61 by spigot connection at two locations using the first spigot portion 124 and the second spigot portion 126 which are disposed at a distance in the axial direction, and accordingly the coupling portion between the rotor shaft 12 and the rotation shaft 61 is long. As a result, even in the case where the rotor shaft 12 is supported by the bearing 40 including a backlash, it is possible to prevent the deviation of the shaft centers of the shafts at the time of assembling and improve the centering accuracy of the rotor shaft 12.

In the motor system 100 of the present embodiment, the seal member S1 is disposed between the first spigot portion 124 of the rotor shaft 12 and the first insertion portion 611 of the rotation shaft 61, and at least one of the rotor shaft 12 and the rotation shaft 61 is formed with the oil supply path 14 that communicates with the shaft hole 61A and supplies the lubricating oil to the coupling portion between the rotor shaft 12 and the rotation shaft 61.

As a result, the lubricating oil can be supplied to the space F1 between the inner peripheral surface of the shaft hole 12A of the rotor shaft 12 and the outer peripheral surface of the rotation shaft 61 sealed by the seal member S1, and the friction coefficient between the rotor shaft 12 and the rotation shaft 61 can be lowered to prevent wear. Further, since the lubricating oil does not flow out of the space F1 by providing the seal member S1, the lubricating oil does not flow into the inside of the motor 50.

Further, in the present embodiment, in the first spigot portion 124, the gap LA1 between the rotor shaft 12 and the rotation shaft 61 on the tip side of the rotor shaft 12 with respect to the seal member S1 is larger than the gap LO1 between the rotor shaft 12 and the rotation shaft 61 on the spline portion 125 side with respect to the seal member S1.

Thus, in order to improve the centering accuracy, the gap LO1 located in the first spigot portion 124 is narrowed, and the gap LA1 on the tip side of the rotor shaft 12 is designed to be larger than LO1, so that even when the rotor shaft 12 is inclined, it is possible to prevent the rotor shaft 12 and the rotation shaft 61 from coming into contact with each other.

Further, in the present embodiment, the rotor shaft 12 has the shaft hole 12A at the tip thereof into which the rotation shaft 61 is inserted, the first spigot portion 124 is formed on the inner peripheral surface of the shaft hole 12A and is fitted to the outer peripheral surface of the rotation shaft 61 at a position including the tip part of the rotor shaft 12, and the second spigot portion 126 is formed on the inner peripheral surface of the shaft hole 12A and is fitted to the outer peripheral surface of the rotation shaft 61 at a position closer to the tip of the rotation shaft 61.

According to this configuration, the centering accuracy of the shafts can be improved by merely providing two spigot connection portions at different positions in the axial direction on the inner peripheral surface of the shaft hole 12A of the rotor shaft 12. Thus, even when no other parts are added to the periphery of the rotor shaft 12 or the rotation shaft 61, the shaft centers of the shafts can be made to coincide with each other, and the centering accuracy can be improved with a simple configuration.

Further, the oil supply path 14 of the present embodiment is formed along the shaft center of the rotor shaft 12, and the lubricating oil is supplied from the base end side toward the tip side of the rotor shaft 12.

In this way, since the oil supply path 14 is formed along the shaft center of the rotor shaft 12, the direction of flow of the lubricating oil supplied to the shaft center of the rotor shaft 12 coincides with the direction in which the space F1 extends, and thus the lubricating oil is easily guided to the space F1.

### <Second Embodiment>

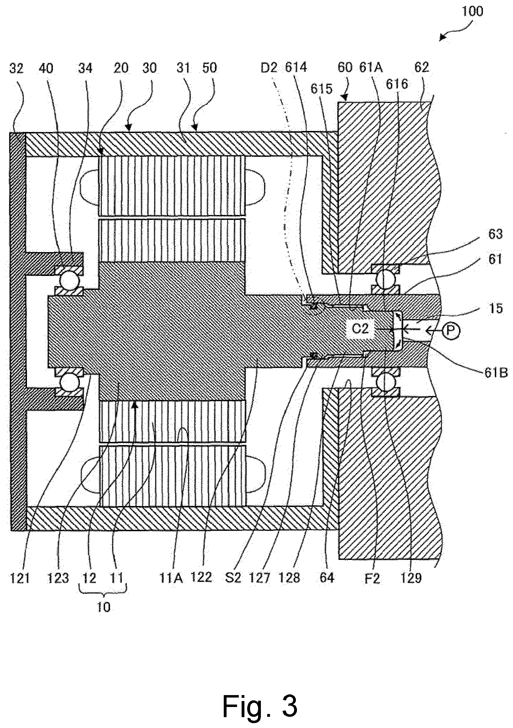

Next, a motor system 100 provided with a transmission 60 and a motor 50 according to a second embodiment is described with reference to FIG. 3. The present embodiment differs from the first embodiment mainly in a configuration of a coupling portion between a rotor shaft 12 and a rotation shaft 61.

The rotor shaft 12 of the present embodiment is inserted into a shaft hole 61A formed at a tip of the rotation shaft 61. The rotation shaft 61 of the transmission 60 has the shaft hole 61A in which a tip surface is formed to be recessed in an axial direction. The shaft hole 61A is configured such that an inner diameter stepwise decreases from the tip toward a hole bottom 61B, and includes a first insertion portion 614, a second insertion portion 615, and a third insertion portion 616 in order from a tip side. The second insertion portion 615 is located on a right side (base end side) of the first insertion portion 614 and has an inner diameter smaller than that of the first insertion portion 614. The third insertion portion 616 is located on the right side (base end side) of the second insertion portion 615, and has an inner diameter smaller than that of the second insertion portion 615.

The other end portion 122 of the rotor shaft 12 is a shaft member formed so that the outer diameter thereof is stepwise reduced toward the tip. A second spigot portion 129, a spline portion 128, and a first spigot portion 127 are formed in order from the tip side of the other end portion 122. The spline portion 128 is located on the right side (tip side) of the first spigot portion 127, and has an outer diameter smaller than the outer diameter of the first spigot portion 127. The second spigot portion 129 is located on the right side (tip side) of the spline portion 128, and has an outer diameter smaller than the outer diameter of the spline portion 128.

In a state in which the rotor shaft 12 is inserted into the shaft hole 61A of the rotation shaft 61, the first spigot portion 127 of the rotor shaft 12 is spigot connected to the rotation shaft 61 at a position where the first spigot portion 127 faces the first insertion portion 614. That is, the first spigot portion 127 formed on an outer peripheral surface of the rotor shaft 12 is fitted to an inner peripheral surface of the shaft hole 61A (first insertion portion 614) at a position closer to the tip of the rotation shaft 61 (position closer to an opening end of the shaft hole 61A). The second spigot portion 129 of the rotor shaft 12 is spigot connected to the rotation shaft 61 at a position where the second spigot portion 129 faces the third insertion portion 616. That is, the second spigot portion 129 formed on the outer peripheral surface of the rotor shaft 12 is fitted to the inner peripheral surface of the shaft hole 61A (third insertion portion 616) at a position including a tip part of the rotor shaft 12 (position closer to the hole bottom of the shaft hole 61A).

The spline portion 128 of the rotor shaft 12 is formed between the first spigot portion 127 and the second spigot portion 129 in the axial direction. In other words, at the other end portion 122 of the rotor shaft 12, the first spigot portion 127 and the second spigot portion 129 are disposed at a distance in the axial direction via the spline portion 128. This spline portion 128 is configured to be spline-coupled to the inner peripheral surface of the rotation shaft 61 (second insertion portion 615). Since the rotor shaft 12 and the rotation shaft 61 are spline-coupled to each other, relative rotational movement between the two shafts is regulated.

According to the above configuration, the rotor shaft 12 is coupled to the rotation shaft 61 via the first and second spigot portions 127 and 129 disposed at a distance in the axial direction with the spline portion 128 interposed therebetween. As a result, since the coupling portion between the rotor shaft 12 and the rotation shaft 61 is long, it is possible to more reliably prevent the deviation of shaft centers between the shafts at the time of assembling.

Next, supply of lubricating oil in the present embodiment will be described.

As in the first embodiment, although the rotor shaft 12 and the rotation shaft 61 are spigot connected and spline-coupled, even in such a shaft coupling portion, there are minute gaps between the first spigot portion 127 and the first insertion portion 614, between the spline portion 128 and the second insertion portion 615, and between the second spigot portion 129 and the third insertion portion 616. These gaps are necessary to insert the tip part of the rotor shaft 12 into the shaft hole 61A of the rotation shaft 61 and do not adversely affect spigot connection and spline connection. Further, in the shaft hole 61A of the rotation shaft 61, a clearance C2 is provided between the tip of the second spigot portion 129 of the rotor shaft 12 and the hole bottom 61B. In the present embodiment, the lubricating oil supplied from an oil supply path 15 is supplied to the shaft coupling portion through the above minute gaps and the clearance C2. Thus, in the present embodiment, a gap existing between the inner peripheral surface of the shaft hole 61A and the outer peripheral surface of the rotor shaft 12 from the clearance C2 to the first spigot portion 127 functions as an oil supply space F2 for supplying the lubricating oil to the shaft coupling portion.

To prevent the lubricating oil supplied from the oil supply path 15 through the space F2 from flowing out from the tip of the rotation shaft 61, a seal member S2 is disposed between the outer peripheral surface of the shaft 12 in the first spigot portion 127 of the rotor shaft 12 and the inner peripheral surface of the first insertion portion 614 of the shaft hole 61A. The seal member S2 is, for example, an O-ring attached to the outer peripheral surface of the first spigot portion 127 of the rotor shaft 12.

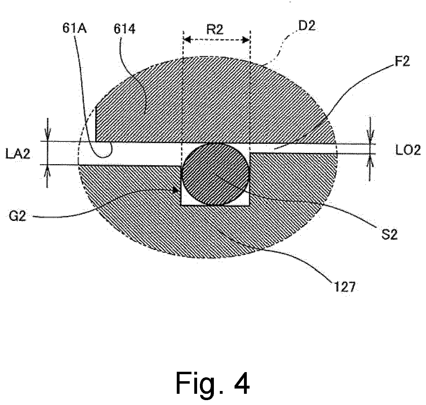

Next, a configuration of a region D2 of the first spigot portion 127 in the second embodiment will be described. FIG. 4 is an enlarged view of the region D2 of the first spigot portion 127.

As illustrated in FIG. 4, an annular groove G2 for disposing a seal member is formed in the circumferential direction on the outer peripheral surface of the rotor shaft 12 in the first spigot portion 127. An axial dimension of the groove G2 is substantially equal to a diameter R2 of the seal member S2 in a cross section. The ring-shaped seal member S2 is fitted into the groove G2 of the first spigot portion 127 and fixed in the axial direction of the rotor shaft 12.

The right side of the first spigot portion 127 of the rotor shaft 12, that is, the first spigot portion 127 on the side of the spline portion 128 with respect to the seal member S2, is a part where the outer peripheral surface of the rotor shaft 12 is spigot connected to the inner peripheral surface of the shaft hole 61A. The outer diameter of the shaft 12 at this part is slightly smaller than the diameter of the shaft hole 61A. As a result, a gap LO2 is formed at the coupling portion between the rotor shaft 12 and the rotation shaft 61.

On the other hand, the left side of the first spigot portion 127, that is, the first spigot portion 127 on the tip side of the rotation shaft 61 with respect to the seal member S2, has a gap LA2 larger than the gap LO2. An upper limit of the size of the gap LA2 is a size at which the seal member S2 does not fall out of the groove G2, and a lower limit of the size of the gap LA2 is a size at which the rotor shaft 12 and the rotation shaft 61 do not come into contact with each other even when the rotor shaft 12 is inclined due to rotational operation or backlash of bearings.

The sizes of the gaps LO2 and LA2 can be designed by adjusting either or both of the outer diameter of the first spigot portion 127 and the inner diameter of the first insertion portion 614. As described above, in the second spigot portion 129 of the present embodiment, the gap LA2 that is a so-called air tightening margin is larger than the gap LO2 that is a so-called oil tightening margin.

As described above, the lubricating oil for lubricating a coupling part between the rotor shaft 12 and the rotation shaft 61 is supplied to the space F2 constituting the gap LO2 as the oil tightening margin. In the present embodiment, as illustrated in FIG. 3, the lubricating oil discharged from a pump P is supplied from the base end side to the tip side of the oil supply path 15, flows into the space F2 from the clearance C2, and is guided to the first spigot portion 127 through the second spigot portion 129. By supplying the lubricating oil in this way, it is possible to prevent wear at the coupling part between the rotor shaft 12 and the rotation shaft 61.

In the present embodiment, the lubricating oil is supplied from the base end side of the rotation shaft 61 toward the tip side. However, a supply direction of the lubricating oil is not limited thereto. For example, the oil supply path 15 may be formed along the shaft center of the rotor shaft 12. In this case, the lubricating oil is supplied from the base end to the tip of the rotor shaft 12, and then flows into the space F2 from the clearance C2.

When the inside of the motor 50 is cooled by the lubricating oil or the like, the lubricating oil supplied to the shaft coupling portion may flow out to the outer periphery of the rotor shaft 12. In such a case, the seal member S2 may not be provided.

The motor 50 (rotating electric machine) of the motor system 100 according to the present embodiment described above can obtain the following effects.

The motor 50 of the motor system 100 of the present embodiment includes the rotor 10 and the stator 20 in the housing 30, and the rotor shaft 12 of the rotor 10 is connected to the rotation shaft 61 of the transmission 60. The housing 30 is provided with the bearing 40, one end portion 121 of the rotor shaft 12 is supported via the bearing 40, and the rotor shaft 12 and the rotation shaft 61 are coupled to each other by inserting the rotor shaft 12 (one of the two shafts) into the shaft hole 61A formed at the tip of the rotation shaft 61 (the other shaft). The rotor shaft 12 includes the first spigot portion 127 that is spigot connected to the rotation shaft 61 at a position corresponding to the tip part of one shaft in which the shaft hole 61A is formed, the second spigot portion 129 that is formed at a position different from the first spigot portion 127 in the axial direction and is spigot connected to the rotation shaft 61, and the spline portion 128 that is formed between the first spigot portion 127 and the second spigot portion 129 and is spline-coupled to the rotation shaft 61.

Thus, the rotor shaft 12 is coupled to the rotation shaft 61 by spigot connection at two locations using the first spigot portion 127 and the second spigot portion 129 which are disposed at a distance in the axial direction, and thus the coupling portion between the rotor shaft 12 and the rotation shaft 61 is long. As a result, even in the case where the rotor shaft 12 is supported by the bearing 40 including a backlash, it is possible to prevent the deviation of the shaft centers of the shafts at the time of assembling and improve the centering accuracy of the rotor shaft 12.

Further, in the present embodiment, the seal member S2 for sealing between the rotor shaft 12 and the rotation shaft 61 is disposed in the first spigot portion 127, and at least one of the rotor shaft 12 and the rotation shaft 61 is formed with the oil supply path 15 that communicates with the shaft hole 61A and supplies the lubricating oil to the coupling portion between the rotor shaft 12 and the rotation shaft 61.

As a result, the lubricating oil can be supplied to the space F2 between the outer peripheral surface of the rotor shaft 12 and the inner peripheral surface of the shaft hole 61A of the rotation shaft 61 sealed by the seal member S2, and the friction coefficient between the rotor shaft 12 and the rotation shaft 61 can be lowered to prevent wear. Further, since the lubricating oil does not flow out of the space F2 by providing the seal member S2, the lubricating oil does not flow into the inside of the motor 50.

Further, in the first spigot portion 127, the gap LA2 between the rotor shaft 12 and the rotation shaft 61 on the tip side of the rotation shaft 61 with respect to the seal member S2 is larger than the gap LO2 between the rotor shaft 12 and the rotation shaft 61 on the spline portion 128 side with respect to the seal member S2.

Thus, in order to improve the centering accuracy, the gap LO2 located in the first spigot portion 127 is narrowed, and the gap LA2 on the tip side of the rotation shaft 61 is designed to be larger than L02, so that even when the rotor shaft 12 is inclined, it is possible to prevent the rotor shaft 12 and the rotation shaft 61 from coming into contact with each other.

Further, the rotor shaft 12 is inserted into the shaft hole 61A formed at the tip of the rotation shaft 61. The first spigot portion 127 is formed on the outer peripheral surface of the rotor shaft 12, and is fitted to the inner peripheral surface of the shaft hole 61A at a position closer to the tip of the rotation shaft 61. The second spigot portion 129 is formed on the outer peripheral surface of the rotor shaft 12, and is fitted to the inner peripheral surface of the shaft hole 61A at a position including the tip part of the rotor shaft 12.

According to this configuration, the centering accuracy of the shafts can be improved by merely providing two spigot connection portions at different positions in the axial direction on the outer peripheral surface of the rotor shaft 12. Thus, even when no other parts are added to the periphery of the rotor shaft 12 or the rotation shaft 61, the shaft centers of the shafts can be made to coincide with each other, and the centering accuracy can be improved with a simple configuration.

Further, in the present embodiment, the oil supply path 15 is formed along the shaft center of the rotation shaft 61, and the lubricating oil is supplied from the base end side toward the tip side of the rotation shaft 61.

In this way, since the oil supply path 15 is formed along the shaft center of the rotation shaft 61, the direction of flow of the lubricating oil supplied to the shaft center of the rotation shaft 61 coincides with the direction in which the space F2 extends, and thus the lubricating oil is easily guided to the space F2.

Although the embodiments of the present invention have been described above, the embodiments merely exemplify some of application examples of the present invention and do not intend to limit the technical scope of the present invention to the specific configurations of the above embodiments.

The rotor core 11, the stator 20, the core supporting portion 13, etc. described in the above embodiments are cylindrical members, but may be tubular-shaped members of polygonal shapes.

Moreover, in each embodiment described above, the motor 50 is assembled to the transmission 60 as a power transmission device, but the motor 50 may be assembled to power transmission devices such as a decelerator. Also in this case, the rotor shaft 12 of the motor 50 and the rotation shaft of the decelerator can be coupled to each other by the application of the technical idea in each embodiment.

Furthermore, in the above embodiments, the regulation of the relative rotation between the rotor shaft 12 and the rotation shaft 61 is implemented with a spline joint structure but may be implemented by joint structures other than the spline joint structure.

## Claims

1. A rotating electric machine comprising a rotor and a stator in a housing, the rotor having a rotor shaft connected to a power transmission shaft of a power transmission device, wherein:
a bearing is provided on the housing,
the rotor shaft has a base end supported via the bearing, and
the rotor shaft and the power transmission shaft are coupled to each other by inserting one of the two shafts into a shaft hole formed at a tip of the other shaft,
the rotor shaft includes:
a first spigot portion that is spigot connected to the power transmission shaft at a position corresponding to a tip part of the one shaft on which the shaft hole is formed;
a second spigot portion that is formed at a position different from the first spigot portion in an axial direction and is spigot connected to the power transmission shaft; and
a spline portion that is formed between the first spigot portion and the second spigot portion and is spline-coupled to the power transmission shaft.

2. The rotating electric machine according to claim 1, wherein:
a seal member for sealing between the rotor shaft and the power transmission shaft is disposed in the first spigot portion, and
at least one of the rotor shaft and the power transmission shaft is formed with an oil supply path that is communicated with the shaft hole to supply lubricating oil to a coupling portion between the rotor shaft and the power transmission shaft.

3. The rotating electric machine according to claim 2, wherein:
in the first spigot portion, a gap between the rotor shaft and the power transmission shaft on a tip side of the one shaft on which the shaft hole is formed with respect to the seal member is larger than a gap between the rotor shaft and the power transmission shaft on the spline portion side with respect to the seal member.

4. The rotating electric machine according to claim 2 or 3, wherein:
the rotor shaft has the shaft hole at a tip thereof into which the power transmission shaft is inserted,
the first spigot portion is formed on an inner peripheral surface of the shaft hole, and is fitted to an outer peripheral surface of the power transmission shaft at a position including a tip part of the rotor shaft, and
the second spigot portion is formed on the inner peripheral surface of the shaft hole, and is fitted to the outer peripheral surface of the power transmission shaft at a position closer to a tip of the power transmission shaft.

5. The rotating electric machine according to claim 4, wherein:
the oil supply path is formed along a shaft center of the rotor shaft, and
the lubricating oil is supplied from a base end side to a tip side of the rotor shaft.

6. The rotating electric machine according to claim 2 or 3, wherein:
the rotor shaft is inserted into the shaft hole formed at a tip of the power transmission shaft,
the first spigot portion is formed on an outer peripheral surface of the rotor shaft, and is fitted to an inner peripheral surface of the shaft hole at a position closer to the tip of the power transmission shaft, and
the second spigot portion is formed on the outer peripheral surface of the rotor shaft, and is fitted to the inner peripheral surface of the shaft hole at a position including a tip part of the rotor shaft.

7. The rotating electric machine according to claim 6, wherein:
the oil supply path is formed along a shaft center of the power transmission shaft, and
the lubricating oil is supplied from a base end side to a tip side of the power transmission shaft.
